# EUROPÄISCHE PATENTANMELDUNG

(11) **EP 2 085 182 A1**
(43) Veröffentlichungstag der Anmeldung: **05.08.2009**
(21) Anmeldenummer: 09000650.3
(22) Anmeldetag: 19.01.2009
(51) Int. Cl.: B24B 45/00, B24B 23/04, B23Q 3/12

(54) **Oszillierend antreibbare Werkzeugmaschine**

(30) Priorität: 01.02.2008 DE 202008001759 U
(71) Anmelder: C. & E. Fein GmbH, 73529 Schwäbisch Gmünd-Bargau (DE)
(72) Erfinder: Peisert, Andreas, 70195 Stuttgart (DE)
(74) Vertreter: Gahlert, Stefan

(57) **Zusammenfassung**

Es wird eine oszillierend antreibbare Werkzeugmaschine angegeben, mit einem Oszillationsantrieb (16) zum Antrieb einer Antriebswelle (26) um ihre Längsachse, mit einem an der Antriebswelle (26) angeordneten Flansch (42), gegen den ein Oszillationswerkzeug (48) mittels eines Gegenflansches (54) unter Federkraft verspannbar ist, und mit einer Verschiebeeinrichtung (31) zur Verschiebung des Gegenflansches (54) zwischen einer Arbeitsposition, in der das Oszillationswerkzeug (48) durch eine Federeinrichtung (34) zwischen dem Flansch (42) und dem Gegenflansch (54) verspannbar ist, und einer Löseposition, in der der Gegenflansch (54) vom Flansch (42) lösbar ist (Fig. 1)

## Beschreibung

Die Erfindung betrifft eine oszillierend antreibbare Werkzeugmaschine, mit einem Oszillationsantrieb zum Antrieb einer Antriebswelle um ihre Längsachse, und mit einer Befestigungseinrichtung zur Befestigung eines Oszillationswerkzeuges am Oszillationsantrieb.

Oszillationswerkzeuge sind seit vielen Jahren bekannt und in zahlreichen Ausführungen gebräuchlich, um die verschiedensten Bearbeitungsvorgänge vorzunehmen. So werden oszillierend angetriebene Werkzeuge beispielsweise zum Schleifen, zum Sägen und zum Schneiden von verschiedenartigen Materialien eingesetzt. Besondere Vorteile ergeben sich hierbei insbesondere durch die Vermeidung einer Verletzungsgefahr bei einer Ausführung als Säge sowie durch die Möglichkeit eines Arbeitens auf engstem Raum. Wegen der hohen Drehmomente, die infolge des oszillierenden Antriebs auf das Oszillationswerkzeug übertragen werden müssen, ist in der Regel eine formschlüssige Verbindung zwischen dem Oszillationswerkzeug und der Antriebswelle erforderlich. Obgleich solche Verbindungen grundsätzlich auch mit Hilfe von Schraubverbindungen hergestellt werden können, wäre es wünschenswert, hierfür eine möglichst einfache und schnelle Handhabung zu erreichen. Außerdem soll eine derartige Verbindung möglichst einfach und kostengünstig herstellbar sein.

Der Erfindung liegt somit die Aufgabe zugrunde, eine oszillierend antreibbare Werkzeugmaschine anzugeben, die ein möglichst einfaches und schnelles Wechseln des Oszillationswerkzeuges ermöglicht und gleichzeitig eine einfache und kostengünstige Herstellung erlaubt.

Diese Aufgabe wird durch eine oszillierend antreibbare Werkzeugmaschine gelöst, mit einem Oszillationsantrieb zum Antrieb einer Antriebswelle um ihre Längsachse, mit einem an der Antriebswelle angeordneten Flansch, gegen den ein Oszillationswerkzeug mittels eines Gegenflansches unter Federkraft verspannbar ist, und mit einer Verschiebeeinrichtung zur Verschiebung des Gegenflansches zwischen einer Arbeitsposition, in der das Oszillationswerkzeug durch eine Federeinrichtung zwischen dem Flansch und dem Gegenflansch verspannbar ist, und einer Löseposition, in der der Gegenflansch vom Flansch lösbar ist.

Die Aufgabe der Erfindung wird auf diese Weise vollkommen gelöst.

Durch die erfindungsgemäße Verschiebeeinrichtung zur Verschiebung des Gegenflansches zwischen der Arbeitsposition und der Löseposition wird ein einfaches Wechseln des Oszillationswerkzeuges ermöglicht, indem der an der Antriebswelle angeordnete Flansch zunächst mittels der Verschiebeeinrichtung in die Löseposition gebracht wird, und sodann der Gegenflansch ohne Zuhilfenahme eines Werkzeuges vom Flansch gelöst werden kann. Soll das Oszillationswerkzeug anschließend wieder in seine Arbeitsposition gebracht werden, so muss nach der Befestigung des Gegenflansches auf dem Flansch lediglich die Verschiebeeinrichtung wieder in ihre Arbeitsposition gebracht werden. Hierdurch wird der Gegenflansch unter Federkraft gegen den Flansch verspannt. Auf diese Weise ergibt sich eine sehr einfache uns schnelle Wechselmöglichkeit für das Oszillationswerkzeug.

In einer vorteilhaften Weiterbildung der Erfindung weist die Werkzeugmaschine ein Getriebegehäuse auf, in dem der Oszillationsantrieb aufgenommen ist, und aus dem die Antriebswelle nach außen hervorsteht, wobei die Antriebswelle einen hohlen Abschnitt aufweist, in dem die Federeinrichtung außerhalb des Getriebegehäuses aufgenommen ist.

Hierdurch ist ein einfacher Aufbau gewährleistet. Insbesondere wird durch die Anordnung des hohlen Abschnittes der Antriebswelle außerhalb des Getriebegehäuses ein einfaches Wechseln der Federeinrichtung ermöglicht, sofern diese nach längerem Arbeitseinsatz im Wartungsfalle ausgetauscht werden muss.

Gemäß einer weiteren Ausgestaltung der Erfindung weist die Verschiebeeinrichtung einen Hebel auf, mittels dessen ein Druckstück gegen die Wirkung der Federeinrichtung axial verschiebbar ist.

Der Hebel ist hierzu vorzugsweise verschwenkbar gelagert.

Mit einer derartigen Ausführung wird ein einfacher Aufbau der Verschiebeeinrichtung ermöglicht.

Gemäß einer weiteren Ausgestaltung der Erfindung ist am Druckstück ein Gewinde vorgesehen, auf das der Gegenflansch aufschraubbar ist.

Dieses Merkmal erlaubt eine einfache Befestigung des Gegenflansches am Druckstück.

Gemäß einer weiteren Ausgestaltung der Erfindung weist die Antriebswelle einen hohlen Abschnitt auf, der aus dem Getriebegehäuse hervorsteht und innerhalb dessen die Federeinrichtung zwischen einem stirnseitigen Ende des hohlen Abschnitts und einem Absatz am Druckstück eingeschlossen ist.

Hierdurch wird eine einfache Montage der Federeinrichtung und ein einfacher Aufbau gewährleistet.

Gemäß einer weiteren Ausgestaltung der Erfindung ist am äußeren Ende der Antriebswelle mindestens ein Formschlusselement zur formschlüssigen Verbindung der Antriebswelle vorgesehen.

In bevorzugter Weiterbildung dieser Ausführung ist zwischen dem Gegenflansch und dem Oszillationswerkzeug mindestens ein Formschlusselement vorgesehen.

Durch diese Merkmale wird eine formschlüssige Verbindung zwischen dem Oszillationswerkzeug und der Antriebswelle gewährleistet. Auf diese Weise können auch hohe Drehmomente ohne Weiteres auf das Oszillationswerkzeug übertragen werden.

Gemäß einer weiteren Ausgestaltung der Erfindung ist die Federeinrichtung als Tellerfeder oder als Schraubenfeder ausgebildet.

Insbesondere bei einer Ausführung der Federeinrichtung als Tellerfeder können hohe Federkräfte realisiert werden, um eine sichere Verspannung des Gegenflansches gegen den Flansch zu gewährleisten.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine teilweise geschnittene Darstellung einer erfindungsgemäßen Werkzeugmaschine;
- Fig. 2: eine teilweise geschnittene Ansicht der Antriebswelle gemäß Fig. 1 in vergrößerter Darstellung;
- Fig. 3: eine Ansicht des Druckstückes gemäß Fig. 1 in vergrößerter Darstellung und
- Fig. 4: einen Schnitt durch den Gegenflansch gemäß Fig. 1 in vergrößerter Darstellung.

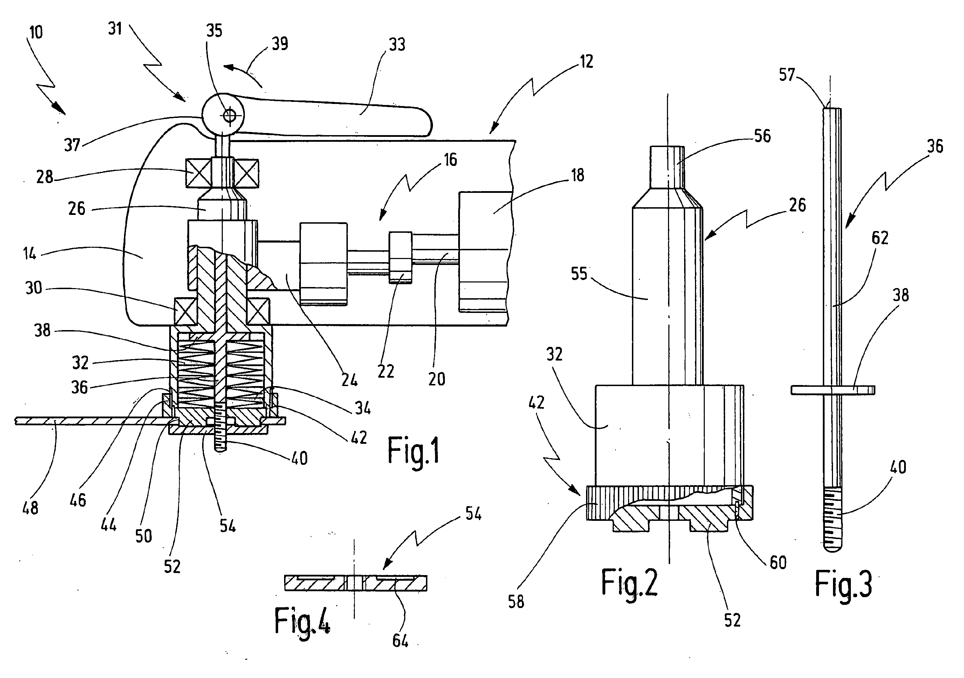

In Fig. 1 ist eine insgesamt mit 10 bezeichnete erfindungsgemäße Werkzeugmaschine im Bereich ihres Getriebegehäuses teilweise geschnitten dargestellt. Die Werkzeugmaschine 10 ist als handgehaltener Oszillierer ausgebildet. Sie weist einen Antriebsmotor 18 auf, dessen Motorwelle 20 einen Exzenter 22 antreibt, über den eine Schwinggabel 24, die mit einer Antriebswelle 26 drehfest verbunden ist, oszillierend angetrieben wird. Die Antriebswelle wird so in eine um ihre Längsachse hin- und her oszillierende Antriebsbewegung mit hoher Frequenz zwischen etwa 5.000 und 20.000 Oszillationen pro Minute und kleinem Verschwenkwinkel zwischen etwa 0,5 und 7° angetrieben. Die Antriebswelle 26 ist insgesamt zylindrisch ausgebildet und weist an ihrem einen Ende einen zylindrischen Ansatz 56 mit geringerem Durchmesser auf, an den sich ein zylindrischer Abschnitt 55 mit einem größeren Durchmesser anschließt, der sich schließlich mit einer Stufe auf einen hohlen Abschnitt 32 mit nochmals vergrößertem Außendurchmesser anschließt. Die Antriebswelle 26 (Fig. 2) ist mit ihrem zylindrischen Ansatz 56 an einem Lager 28 und mit ihrem zylindrischen Abschnitt 55 an einem Lager 30 gelagert. Dabei ist die Antriebswelle 26 derart am Getriebegehäuse 14 eingebaut, dass der hohle Abschnitt 32 außerhalb des Getriebegehäuses 14 gehalten ist. Die Antriebswelle 26 ist mittels einer insgesamt mit 31 bezeichneten Verschiebeeinrichtung in Axialrichtung gegen die Wirkung einer Federeinrichtung 34 verschiebbar. Die Antriebswelle 26 ist über ihre gesamte Länge einer Bohrung durchsetzt, in der ein Druckstück 36 (Fig. 3) mit seinem zylindrischen Abschnitt 62 axial verschiebbar ist.

Innerhalb des hohlen Abschnitts 32 der Antriebswelle 26 ist ein Federelement 34, das als Tellerfeder ausgebildet ist, aufgenommen und an seinem einen Ende gegen einen Flanschansatz 38 des Druckstückes 36 gehalten und an seinem anderen Ende von einem Flansch 42, der mittels eines Innengewindes 44 auf ein Außengewinde 46 des hohlen Abschnittes 32 aufgeschraubt ist. Die Verschraubung kann z.B. durch eine Kontermutter oder eine Verstiftung gesichert sein. Auf diese Weise ist durch das Federelement 34 das Druckstück 36 in Richtung auf das Getriebegehäuse 14 federnd beaufschlagt. An der dem Getriebegehäuse 14 abgewandten Außenoberfläche des Flansches 42 ist eine Mehrzahl von Formschlusselementen 52 angeformt, die durch eine Befestigungsöffnung 50 eines Werkzeuges 48 hindurch greifen und so einen Formschluss mit dem Werkzeug 48 bilden. Am äußeren Ende des Druckstückes 36 ist ein Gewindeabschnitt 40 vorgesehen, auf den ein Gegenflansch 54 aufgeschraubt ist. An der dem Getriebegehäuse 14 zugewandten Seite des Gegenflansches 54 sind Ausnehmungen 64 vorgesehen, die auf die Form der Formschlusselemente 52 des Flansches 42 abgestimmt sind, so dass auch der Gegenflansch 54 formschlüssig mit dem Flansch 42 verbunden ist.

In Fig. 1 ist die erfindungsgemäße Werkzeugmaschine 10 in ihrer Arbeitsstellung dargestellt, in der die Verschiebeeinrichtung 31 das Druckstück 36 nicht gegen die Federeinrichtung 34 beaufschlagt.

Die Verschiebeeinrichtung 31 weist einen Hebel 33 auf, der um eine Schwenkachse 35 verschwenkbar gelagert ist. Am Hebel 33 ist ferner ein Exzenter 37 vorgesehen, der am stirnseitigen Ende 57 des Druckstückes 36 angreift. Wird nun der Hebel 33 in Richtung des Pfeiles 39 nach außen geschwenkt, so wird das Druckstück 36 durch den Exzenter 37 in Axialrichtung gegen die Wirkung des Federelementes 34 nach außen verschoben, so dass der Gegenflansch 54 von der Federwirkung der Federeinrichtung 34 entlastet wird und von Hand ohne Zuhilfenahme eines Werkzeuges vom Gewindeabschnitt 40 abgeschraubt werden kann. Sodann kann das Werkzeug 48 abgenommen werden und gegen ein anderes Werkzeug ausgetauscht werden.

Soll nun die Werkzeugmaschine 10 ausgehend von dieser Lösestellung wieder in ihre Arbeitsstellung gebracht werden, so wird zunächst das Werkzeug 48 mit seiner Befestigungsöffnung 50 auf die Formschlusselemente 52 des Flansches 42 aufgesetzt und dann der Gegenflansch 54 auf den Gewindeabschnitt 40 aufgeschraubt. Anschließend wird der Hebel 33 entgegen der Richtung des Pfeiles 39 wieder in die in Fig. 1 gezeigte Stellung gebracht, wodurch das Druckstück 36 wieder axial nach außen wandern kann, so dass der Gegenflansch 54 nunmehr unter der Wirkung der Federeinrichtung 34 gegen den Flansch 42 fest verspannt ist. Gleichzeitig sind in dieser Stellung die Ausnehmungen 64 des Gegenflansches formschlüssig mit den Formschlusselementen 52 des Flansches 42 verbunden, wobei gleichzeitig auch das Werkzeug 48 mit seiner Befestigungsöffnung 50 formschlüssig an den Formschlusselementen 52 aufgenommen ist.

Wird nunmehr der Oszillationsantrieb 16 betätigt, indem der Motor 18 eingeschaltet wird, so können auch hohe Drehmomente auf das Werkzeug 48 übertragen werden, ohne dass die Gefahr eines Lösens des Gegenflansches 54 vom Flansch 42 besteht.

Da es sich bei der Antriebswelle 26, dem Flansch 42, dem Gegenflansch 54 und dem Druckstück 36 um einfache Drehteile handelt, ergibt sich eine einfache und kostengünstige Herstellung der Spanneinrichtung. Sollte nach längerer Betriebszeit ein Wechseln der Federeinrichtung 34 etwa wegen Ermüdung der Tellerfedern notwendig werden, so kann dies einfach von außen ohne Öffnen des Getriebegehäuses durchgeführt werden.

Der Flansch 42 ist nur auf das Außengewinde 46 der Antriebswelle 26 aufgeschraubt und durch Verschraubungen 60 verdrehsicher festgelegt. Alternativ könnte auf dem Außengewinde 46 beispielsweise eine Kontermutter (nicht dargestellt) verwendet werden.

Es versteht sich, dass in der Arbeitsstellung ein geringer Zwischenraum zwischen dem stirnseitigen Ende 57 des Druckstücks 36 und dem Exzenter 37 verbleibt (auch wenn dieser in Fig. 1 nicht erkennbar ist), um unnötige Reibung während des Betriebes zu vermeiden.

## Patentansprüche

1. Oszillierend antreibbare Werkzeugmaschine, mit einem Oszillationsantrieb (16) zum Antrieb einer Antriebswelle (26) um ihre Längsachse, mit einem an der Antriebswelle (26) angeordneten Flansch (42), gegen den ein Oszillationswerkzeug (48) mittels eines Gegenflansches (54) unter Federkraft verspannbar ist, und mit einer Verschiebeeinrichtung (31) zur Verschiebung des Gegenflansches (54) zwischen einer Arbeitsposition, in der das Oszillationswerkzeug (48) durch eine Federeinrichtung (34) zwischen dem Flansch (42) und dem Gegenflansch (54) verspannbar ist, und einer Löseposition, in der der Gegenflansch (54) vom Flansch (42) lösbar ist.

2. Werkzeugmaschine nach Anspruch 1, mit einem Getriebegehäuse (14), in dem der Oszillationsantrieb (16) aufgenommen ist, und aus dem die Antriebswelle (26) nach außen hervorsteht, wobei die Antriebswelle (26) einen hohlen Abschnitt (32) aufweist, in dem die Federeinrichtung (34) außerhalb des Getriebegehäuses (14) aufgenommen ist.

3. Werkzeugmaschine nach einem der vorhergehenden Ansprüche, bei der die Verschiebeeinrichtung (31) einen Hebel (33) aufweist, mittels dessen ein Druckstück (36) gegen die Wirkung der Federeinrichtung (34) axial verschiebbar ist.

4. Werkzeugmaschine nach Anspruch 3, bei der der Hebel (33) verschwenkbar gelagert ist.

5. Werkzeugmaschine nach Anspruch 3 oder 4, bei der am Druckstück (36) ein Gewinde (40) vorgesehen ist, auf das der Gegenflansch (54) aufschraubbar ist.

6. Werkzeugmaschine nach einem der Ansprüche 2 bis 5, bei der die Antriebswelle (26) einen hohlen Abschnitt (32) aufweist, der aus dem Getriebegehäuse (14) hervorsteht und innerhalb dessen die Federeinrichtung (34) zwischen einem stirnseitigen Ende des hohlen Abschnitts (32) und einem Absatz (38) am Druckstück (36) eingeschlossen ist.

7. Werkzeugmaschine nach einem der vorhergehenden Ansprüche, bei der am äußeren Ende der Antriebswelle mindestens ein Formschlusselement (52) zur formschlüssigen Verbindung mit der Antriebswelle (26) vorgesehen ist.

8. Werkzeugmaschine nach Anspruch 7, bei der zwischen Gegenflansch (54) und Oszillationswerkzeug (48) mindestens ein Formschlusselement (64) vorgesehen ist.

9. Werkzeugmaschine nach einem der vorhergehenden Ansprüche, bei der die Federeinrichtung (34) als Tellerfeder oder als Schraubenfeder ausgebildet ist.
